(19) Europäisches Patentamt
European Patent Office
Office européen des brevets

(11) **EP 2 078 184 B1**

(12) **FASCICULE DE BREVET EUROPEEN**

(45) Date de publication et mention
de la délivrance du brevet:
**27.01.2021 Bulletin 2021/04**

(21) Numéro de dépôt: **07858451.3**

(22) Date de dépôt: **16.10.2007**

(51) Int Cl.:
*G01J 9/00* *(2006.01)*

(86) Numéro de dépôt international:
**PCT/FR2007/001689**

(87) Numéro de publication internationale:
**WO 2008/046998 (24.04.2008 Gazette 2008/17)**

(54) **PROCÉDÉ DE CORRECTION D'UN ANALYSEUR DE FRONT D'ONDE, ET ANALYSEUR IMPLÉMENTANT CE PROCÉDÉ**

VERFAHREN ZUM KORRIGIEREN EINES WELLENFRONTANALYSATORS UND DAS VERFAHREN IMPLEMENTIERENDER ANALYSATOR

METHOD FOR CORRECTING A WAVE FRONT ANALYSER AND ANALYSER IMPLEMENTING SAID METHOD

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(30) Priorité: **16.10.2006 FR 0609061**

(43) Date de publication de la demande:
**15.07.2009 Bulletin 2009/29**

(73) Titulaire: **Imagine Optic**
**91400 Orsay (FR)**

(72) Inventeurs:
• LEVECQ, Xavier
  **91190 Gif sur Yvette (FR)**
• DOVILLAIRE, Guillaume
  **91120 Palaiseau (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**US-A1- 2005 045 801    US-A1- 2005 151 960**

## Description

### Domaine technique

La présente invention concerne un procédé de correction d'un analyseur de front d'onde selon la revendication 1.

Elle vise également un analyseur de front d'onde dans lequel ce procédé est mis en oeuvre selon la revendication 17.

Le domaine de l'invention est celui des analyseurs de front d'onde fonctionnant en mesure directe sur un faisceau. Les analyseurs concernés sont du type :

- Hartmann, comprenant une matrice de trous disposée devant un détecteur matriciel, chaque trou formant à partir d'un front d'onde incident une tache sur le détecteur,
- Shack Hartmann ou Hartmann Shack, comprenant une matrice de micro-lentilles disposée devant un détecteur matriciel, chaque microlentille formant à partir d'un front d'onde incident une tache sur le détecteur, ou
- Shearing interferometer (ou interféromètre multi-ondes), comprenant des moyens pour générer des répliques décalées spatialement d'un front d'onde incident et des moyens pour faire interférer les répliques sur un détecteur matriciel sous la forme de taches ou de franges d'interférences.

### Etat de la technique antérieure

Pour tous ces analyseurs, la position des taches (cas Hartmann ou Shack Hartmann) et la position des franges ou des taches d'interférences (cas du shearing interferometer) sur le détecteur permettent de déterminer, par une interprétation du signal énergétique reçu sur le détecteur, les gradients locaux (les dérivées locales) de la phase du front d'onde incident, ce qui permet de déterminer la courbure du front d'onde incident. Cependant, si la forme des taches (ou franges) est perturbée par une variation locale d'intensité du front d'onde analysé, la mesure du gradient de phase local est elle-même faussée.

Une variation locale d'intensité entraîne une erreur de mesure locale du gradient de phase du front d'onde.

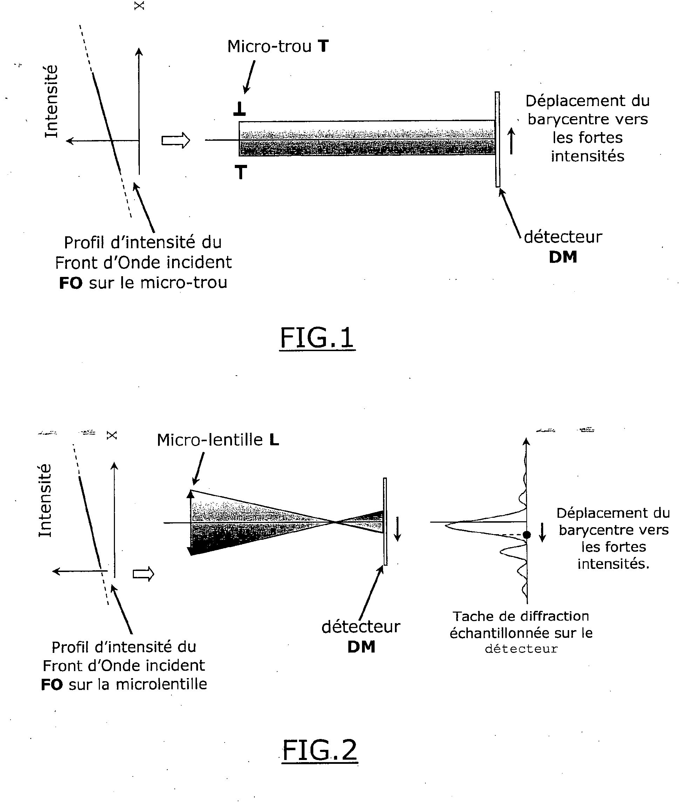

En effet, dans le cas du système Hartmann et en référence à la figure 1, une variation d'intensité à l'échelle d'un micro trou se retrouvé sur la tache mesurée par le détecteur matriciel (CCD ou CMOS typiquement) et la position du barycentre énergétique de la tache n'est plus le reflet exact du déplacement de la tache lié à l'unique modification du gradient de phase local du front d'onde analysé.

Dans le cas où la phase incidente sur le micro trou est plane, le résultat de la détermination du gradient local de phase devrait donner un gradient nul. Cependant, la variation locale de l'intensité décale le barycentre énergétique et le résultat du calcul donne un gradient non nul. Cet écart est l'erreur liée à la variation d'intensité devant le micro-trou.

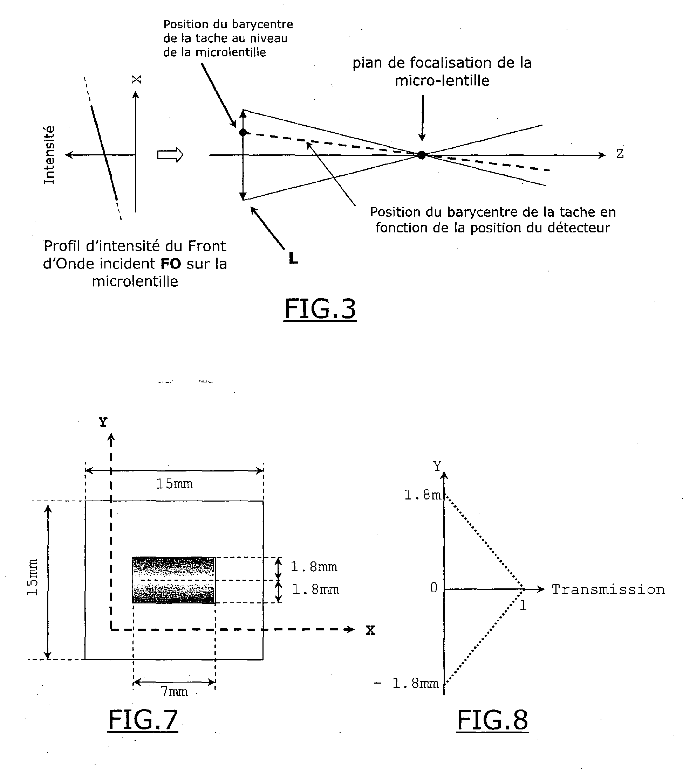

Dans le cas de la technologie Shack-Hartmann et en référence aux figures 2 et 3, le principe est très similaire. Cependant, la présence de microlentilles change un peu le fonctionnement. En effet lorsque le plan du détecteur se trouve dans le plan de focalisation d'une micro-lentille, la position du barycentre énergétique n'est pas dépendante de la répartition d'intensité devant la micro-lentille.

Dans cette configuration, la mesure du gradient de phase est complètement indépendante des gradients d'intensité. Malheureusement, cette propriété n'est vérifiée que pour une seule position de fonctionnement du détecteur par rapport aux micro-lentilles, et pour une longueur d'onde donnée de l'onde incidente. La position de fonctionnement est réglée, en général, lors du montage pour des faisceaux collimatés (courbure locale nulle devant la microlentille), c'est-à-dire que le détecteur est placé dans le plan focal des microlentilles. On peut citer à ce sujet le document [1], référencé en dernière page.

Cependant, lorsque le faisceau présente des aberrations (courbure astigmatisme, coma, aberration sphérique...), la courbure locale du front d'onde devant chaque microlentille n'est plus nulle et le point de focalisation de la micro-lentille ne se retrouve plus dans le plan du détecteur. Dans cette configuration, une variation d'intensité devant la microlentille entraîne une modification de la position du barycentre énergétique de la tache.

L'erreur liée à la variation locale d'intensité du front d'onde devant chaque microlentille dépend donc de la courbure locale du front d'onde devant ladite microlentille. Plus le point de focalisation sera éloigné du détecteur, plus l'influence de la répartition d'intensité est grande.

L'influence de la variation d'intensité sur la détermination des gradients locaux de phase du front d'onde dans le cas du shearing interferometer (interféromètre à décalage latéral) est très similaire au cas de la technologie Hartmann. En effet, le principe de l'interféromètre à décalage latéral est de faire interférer entre elles au moins deux répliques de l'onde incidence en les décalant latéralement les unes par rapport aux autres.

On peut notamment citer à ce sujet les documents [2] et [3] référencés en dernière page, ainsi que les documents US 2005/045801 A1 et US 2005/151960 A1.

Le phénomène d'interférence fait intervenir le terme de phase de l'onde incidence (ce que l'on cherche à mesurer) mais aussi l'amplitude de l'onde (liée à l'intensité). La figure d'interférence est donc modifiée par une variation d'intensité du front d'onde incident et le calcul du gradient de phase s'en trouve perturbé.

Un but principal de la présente invention est de remédier à ces inconvénients en proposant un procédé de correction pour un analyseur de front d'onde.

## Exposé de l'invention

Cet objectif est atteint en mettant en œuvre un procédé pour corriger un analyseur de front d'onde, cet analyseur mettant en œuvre une détection d'un signal à partir d'un front d'onde incident à analyser, ledit signal ainsi détecté procurant des informations locales de phase et d'intensité du front d'onde à analyser, caractérisé en ce qu'il comprend une correction d'un calcul de phase du front d'onde à analyser en fonction d'une variation spatiale d'intensité du front d'onde à analyser.

On dispose ainsi d'une voie particulièrement efficace pour prendre en compte les inévitables variations d'intensité observées dans de nombreuses sources optiques.

L'analyseur peut mettre en œuvre une étape de décomposition du front d'onde à analyser en une pluralité de taches ou de franges sur un détecteur.

Ainsi, le procédé de correction selon l'invention peut typiquement être mis en œuvre pour corriger :

- un analyseur du type Hartmann, à matrice de micro-trous,
- un analyseur du type Shack-Hartmann ou Hartmann-Shack, à matrice de microlentilles,
- un analyseur de phase du type interféromètre multi-ondes,

ces exemples n'étant pas limitatifs.

Dans un premier mode de réalisation, la correction peut consister en une correction d'un calcul de gradients locaux de phase du front d'onde à analyser (FO) en fonction de gradients locaux d'intensité du front d'onde à analyser (FO). Le procédé selon l'invention peut comprendre en outre les étapes suivantes :

- une mesure de l'intensité de chaque tache ou frange,
- une détermination des gradients locaux d'intensité du front d'onde à analyser.

Cette détermination des gradients locaux permet de faire une cartographie des gradients locaux d'intensité du front d'onde à analyser (par exemple devant chaque micro-trou dans le cas d'un analyseur du type Hartmann, ou devant chaque micro-lentille dans le cas d'un analyseur du type Shack-Hartmann). Plus généralement, on peut déterminer un gradient local d'intensité à partir de l'intensité d'une frange ou d'une tache et des intensités des franges ou taches voisines.

De manière préférentielle, la correction est réalisée selon une loi de correction. Cette loi de correction peut être connue ou déterminée de façon expérimentale ou théorique.

Le premier mode de réalisation du procédé selon l'invention peut comprendre une détermination expérimentale ou théorique de la loi de correction du calcul de gradients locaux de phase du front d'onde à analyser en fonction des gradients locaux d'intensité du front d'onde à analyser. Une variante expérimentale de ce premier mode comprend une étape de , calibration pour déterminer cette loi de correction. Cette étape de calibration peut avantageusement comprendre, avant la détection du signal à partir du front d'onde à analyser, les étapes suivantes :

- une injection, en entrée de l'analyseur, d'un front d'onde sensiblement homogène en intensité et dont la phase est connue,
- une insertion, devant l'entrée de l'analyseur, d'un masque dont la transmission n'est pas homogène spatialement, de sorte que le front d'onde homogène traverse le masque avant d'être décomposé par l'analyseur en une pluralité de taches ou de franges sur le détecteur,
- une observation de la position de chacune des taches ou franges obtenues sur le détecteur en présence du masque, et
- une détermination, à partir de ladite observation, de la loi de correction à apporter (de préférence à chaque tache ou frange) pour le calcul des gradients locaux de phase du front d'onde à analyser en fonction des gradients locaux d'intensité du front d'onde à analyser.

L'expression « front d'onde de phase connue » signifie ici et par la suite un front d'onde dont la forme ou la phase est connue d'un utilisateur du procédé selon l'invention ou d'un analyseur, d'un dispositif ou d'un logiciel mettant en œuvre le procédé selon l'invention, cette connaissance pouvant être théorique ou issue d'une mesure ; ce front d'onde peut par exemple dans un cas simple être de phase plane. Dans le cas d'un analyseur de type Shack-Hartmann, les étapes de la détermination de la loi de correction doivent a priori être réitérées pour plusieurs positions longitudinales, par rapport au détecteur, du plan de focalisation de chaque tache (par exemple pour différentes distances entre le détecteur et la matrice de micro-lentilles), la loi de correction pour le calcul des gradients locaux de phase du front d'onde à analyser en fonction des gradients locaux d'intensité du front d'onde à analyser dépendant à priori de cette distance.

Le premier mode de réalisation de procédé selon l'invention peut comprendre en outre, pour la détermination de la loi la correction, une observation de la position de chacune des taches ou franges obtenues sur le détecteur sans le masque, cette observation pouvant servir de référence.

Dans le premier mode de réalisation de procédé selon l'invention (et de manière générale), l'observation de la position d'une tache ou frange peut comprendre une détermination de la position du barycentre énergétique de la tache ou frange sur le détecteur.

Une variante théorique du premier mode de réalisation de procédé selon l'invention peut comprendre une connaissance ou une détermination théorique de la loi de correction du calcul de gradients locaux de phase du front d'onde à analyser en fonction de gradients locaux d'intensité du front d'onde à analyser, par exemple sous la forme d'un algorithme de calcul, d'une formule ou d'une table de calcul. Dans les cas d'un analyseur Shack-Hartmann, cette loi dépend en outre pour chaque micro-lentille de la distance entre le détecteur et le point de focalisation de la micro-lentille, et donc de la distance entre le détecteur et la matrice de micro-lentilles.

On peut aussi prévoir, pour un analyseur du type Shack-Hartmann comprenant une matrice de microlentilles , les étapes suivantes :

- une cartographie des gradients locaux de phase du front d'onde à analyser, de préférence devant chaque micro-lentille,
- une cartographie des gradients locaux d'intensité du front d'onde à analyser, de préférence-devant chaque micro-lentille,
- une détermination à partir desdits gradients locaux de phase, d'une cartographie des courbures locales de phase du front d'onde à analyser (par exemple au moyen d'une dérivation desdits gradients locaux de phase),
- une détermination d'une position longitudinale du plan de focalisation de chacune des taches,
- pour chaque tache, une correction pour le calcul des gradients locaux de phase, à partir de la position du plan de focalisation de la tache et de la cartographie des gradients d'intensité devant chaque microlentille.

Cette correction étant effectuée au moyen de la loi de correction connue expérimentalement grâce à une calibration ou théoriquement.

Un deuxième mode de réalisation de procédé selon l'invention, mis en œuvre de préférence pour des analyseurs de type Hartmann ou interféromètres multi-ondes, peut comprendre en outre les étapes suivantes :

- une réalisation d'une transformation de Fourier du signal détecté brut,
- un isolement de l'ordre zéro de la Transformée de Fourier,
- une réalisation d'une transformation de Fourier inverse dudit ordre zéro isolé de façon à obtenir une forme de l'intensité du front d'onde à analyser,
- une division dudit signal détecté brut par ladite forme d'intensité.

Un troisième mode de réalisation de procédé selon l'invention, mis en œuvre de préférence pour des analyseurs de type Hartmann, ou interféromètres multi-ondes, peut comprendre en outre les étapes suivantes :

- une réalisation d'une transformation de Fourier du signal détecté brut,
- une étape de déconvolution des ordres premier de la transformée de Fourier du signal brut par l'ordre zéro de la transformée de Fourier du signal brut,
- une reconstruction du front d'onde à analyser corrigé en phase, à partir desdits ordres premier déconvolués.

La reconstruction peut par exemple consister en une transformée de Fourier inverse du résultat d'une fonction appliquée sur lesdits ordres premier déconvolués.

Pour un analyseur du type Shack-Hartmann, le procédé de correction selon l'invention peut avantageusement comprendre, avant la détection du signal à partir du front d'onde à analyser, une optimisation de l'analyseur comprenant :

- une injection, en entrée de l'analyseur, d'un front d'onde sensiblement homogène en intensité et dont la phase est connue,
- une insertion, devant l'entrée de l'analyseur, d'un masque dont la transmission n'est pas homogène spatialement, de sorte que le front d'onde homogène traverse le masque avant d'être décomposé par l'analyseur en une pluralité de taches sur le détecteur,
- une observation de la position de chacune des taches obtenues sur le détecteur en présence du masque,

- un retrait du masque de devant l'entrée de l'analyseur,
- une observation sans masque de la position de chacune des taches obtenues sur le détecteur,
- un déplacement du détecteur relativement à la matrice de micro-lentilles, et
- une réitération des étapes précédentes pour minimiser la différence de position des taches entre l'observation sans masque et l'observation en présence du masque.

Ainsi, l'analyseur est optimisé pour des fronts d'onde à analyser dont la forme ou phase est proche de celle du front d'onde dont la phase est connue. L'observation de la position d'une tache ou frange peut comprendre une détermination de la position du barycentre énergétique de la tache ou frange sur le détecteur.

Suivant un autre aspect de l'invention, il est proposé un analyseur de front d'onde implémentant un procédé de correction selon l'invention, comprenant des moyens pour réaliser tout ou partie des étapes décrites précédemment.

**Description des figures et modes de réalisation**

D'autres avantages et caractéristiques de l'invention apparaîtront à l'examen de la description détaillée d'un mode de mise en œuvre nullement limitatif, et des dessins annexés sur lesquels :

- la figure 1 illustre un front d'onde dont l'intensité devant un micro-trou d'un analyseur de type Hartmann n'est pas homogène, ce qui entraîne un déplacement vers les fortes intensités de la position du barycentre énergétique de la tache crée par le micro-trou sur un détecteur ;
- La figure 2 illustre un front d'onde dont l'intensité devant une microlentille d'un analyseur de type Shack Hartmann n'est pas homogène, ce qui entraîne un déplacement vers les fortes intensités de la position du barycentre énergétique de la tache crée par la micro lentille sur un détecteur ;
- La figure 3 illustre, pour l'analyseur Shack Hartmann illustré sur la figure 2, la position du barycentre de la tache en fonction de la position du détecteur par rapport à la micro-lentille ;
- La figure 4 représente schématiquement un système d'analyse et de reconstruction de front d'onde implémentant un procédé de correction selon l'invention ;
- La figure 5 représente schématiquement un analyseur de front d'onde de type Shack-Hartmann dont le plan de focalisation des micro-lentilles n'est pas confondu avec le plan du détecteur matriciel et devant lequel a été disposé un masque dont la transmission n'est pas homogène spatialement ;
- La Figure 6 représente schématiquement un analyseur de front d'onde de type Hartmann devant lequel a été disposé un masque dont la transmission n'est pas homogène spatialement ;
- La figure 7 est une vue de face du masque représenté sur les figures 5 et 6;
- La figure 8 est une vue du profil de transmission du masque représenté sur les figures 5 et 6 ;
- La figure 9 illustre un signal brut obtenu à partir d'un analyseur générant une matrice de taches, par exemple de technologie interféromètre multi-ondes à 4 ondes; et
- La figure 10 illustre la transformée de Fourier du signal brut représenté su le figure 9.

On va maintenant décrire, en référence aux figures précitées, plusieurs exemples de analyseurs selon l'invention mettant en œuvre un procédé de correction selon l'invention.

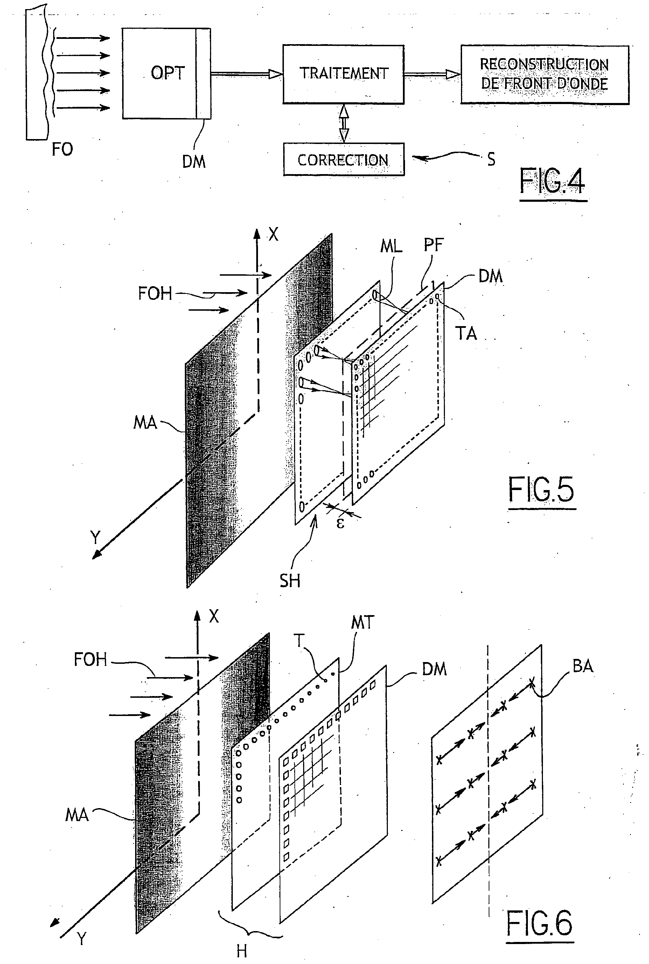

Un système d'analyse et de reconstruction de front d'onde comprend typiquement, en référence à la figure 4 :

- un dispositif optique OPT équipé d'un détecteur matriciel DM et placé devant une source optique dont on souhaite analyser le front d'onde FO,
- une unité de traitement S des signaux issus du détecteur matriciel DM dans laquelle est exécuté un logiciel dédié d'analyse et de reconstruction de front d'onde comme il existe déjà disponible dans le commerce.

Dans la suite de ce document, on considérera que le détecteur matriciel DM est contenu sensiblement dans un plan formé par deux axes sensiblement perpendiculaires X et Y. Le procédé de correction selon l'invention est implémenté en pratique sous la forme d'un module logiciel de correction coopérant avec le logiciel d'analyse et de reconstruction de front d'onde.

Dans le cas d'un analyseur de type Hartmann, en référence aux figures 1 et 6, le dispositif optique H comprend une matrice MT de micro-trous T et le détecteur matriciel DM disposées sensiblement parallèlement. La matrice de micro trou décompose un front d'onde incident FO en une matrice de taches projetée sur le détecteur DM, chaque tache étant associée, à un micro trou. Le signal détecté par le détecteur procure des informations locales de phase et d'intensité du front d'onde FO à analyser.

Dans le cas d'un analyseur de type Shack-Hartmann, en référence aux figures 2, 3 et 5, le système optique SH comprend une matrice ML de microlentilles L et un détecteur matriciel DM sur lequel une pluralité de taches optiques TA est détectée, chaque tache optique correspondant à une microlentille. Dans un tel système, il est fréquent que le plan de focalisation PF de la matrice de microlentilles ne soit pas confondu avec le plan du détecteur matriciel.

Dans le cas d'un analyseur de type interféromètre multi-ondes, le système optique comprend des moyens pour générer des répliques d'un front d'onde incident FO, des moyens pour décaler spatialement les répliques et des moyens pour faire interférer les répliques sur le détecteur matriciel DM. Selon le nombre de répliques interférant, le front d'onde incident est décomposé sur le détecteur en une matrice de taches ou en une série de franges d'interférence. Le signal détecté par le détecteur procure des informations locales de phase et d'intensité du front d'onde FO à analyser.

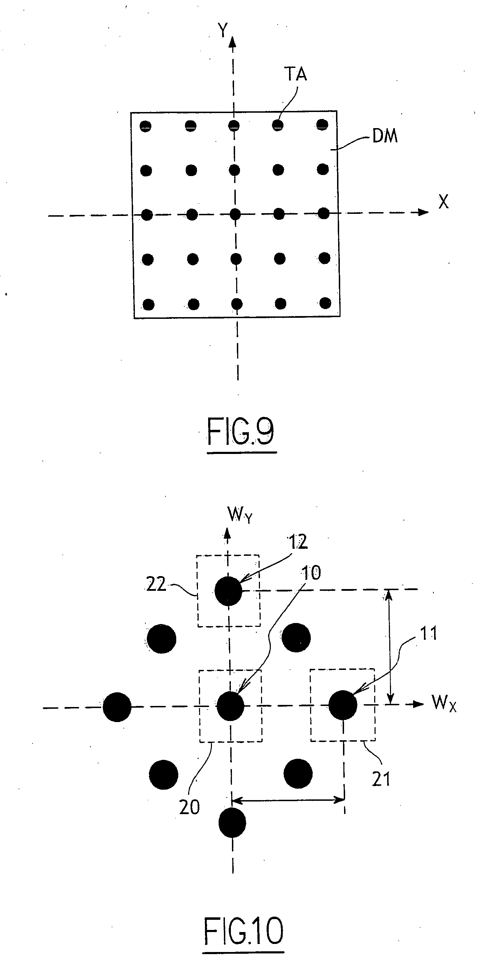

Dans le cas de la technologie interféromètre multi-ondes générant une matrice de taches (par exemple interféromètre à 3 ou 4 ondes), ou dans le cas de la technologie Hartmann générant elle aussi une matrice de taches, un mode de réalisation du procédé selon l'invention consiste à « redresser » le signal brut. Un signal brut obtenu à partir d'une de ces technologies est représenté sur la figure 9. Ce signal consiste en une matrice de taches TA alignées sur le détecteur matriciel DM en lignes le long de l'axe X et en colonne le long de l'axe Y (on entend ici par tache un pic de l'intensité du signal brut détecté). L'intensité I de ces taches n'est pas forcément homogène en X et Y. Pour analyser un front d'onde incident, on réalise la transformée de Fourier du signal brut détecté par le détecteur. On obtient alors le signal représenté sur la figure 10 en fonction des fréquences spatiales Wx et Wy, Wx étant la fréquence spatiale associée à X et Wy étant la fréquence spatiale associée à Y. La transformé de Fourier, en fonction de Wx et Wy, comprend plusieurs taches (on entend ici par tache un pic de la valeur de la transformée de Fourier) dont:

- une tache 10 centrale pour laquelle Wx et Wy sont sensiblement nuls ou du moins proches de zéro, appelée ordre zéro de la Transformée de Fourier,
- une tache 11 directement voisine de l'ordre zéro le long de l'axe des Wx, et pour laquelle Wy est sensiblement nul ou du moins proche de zéro ; cette tache est un ordre premier de la Transformée de Fourier ;
- une tache 12 directement voisine de l'ordre zéro le long de l'axe des Wy, et pour laquelle Wx est sensiblement nul ou du moins proche de zéro ;

cette tache est aussi un ordre premier de la Transformée de Fourier ;

L'ordre zéro contient l'information de la forme de l'intensité du front d'onde incident FO, et contient donc l'information des variations locales d'intensité du front d'onde incident. On isole l'ordre zéro, par exemple au moyen d'un filtre passe bas (représenté par le cadre 20 sur la figure 10) qui enlève à la transformée de Fourier toutes ses valeurs pour des valeurs absolues de Wx supérieures à une valeur donnée et pour des valeurs absolues de Wy supérieures à une valeur donnée. On refait une transformée de Fourier inverse de cet ordre zéro isolé pour obtenir la forme de l'intensité du front d'onde incident et on divise le signal brut par la forme de l'intensité calculée ci-dessus pour l'ordre zéro isolé. Cette opération « redresse » le signal brut et supprime l'influence des variations d'intensité pour le calcul, à partir du signal, des gradients locaux de phase du front d'onde incident.

Dans un formalisme de reconstruction de front d'onde par la méthode dite de « Fourier », où les ordres premier du résultat de la transformée de Fourier du signal brut (qui contiennent les informations des gradients locaux de la phase du front d'onde) sont utilisés pour extraire l'information de phase, il est aussi possible d'introduire une étape de déconvolution des ordres premier par l'ordre zéro avant de procéder à la reconstruction du front d'onde.

Pour déconvoluer les ordres premier par l'ordre zéro, on peut :

- isoler l'ordre zéro par exemple au moyen d'un filtre passe bas (représenté par le cadre 20 sur la figure 10) qui enlève à la transformée de Fourier toutes ses valeurs pour des valeurs absolues de Wx supérieures à une valeur donnée et pour des valeurs absolues de Wy supérieures à une valeur donnée ;
- isoler l'ordre premier 11 au moyen d'un filtre représenté par le cadre 21 sur la figure 10, ce filtre sélectionnant des valeurs de la transformée fourier qui appartiennent uniquement à cet ordre premier 11,
- isoler l'ordre premier 12 au moyen d'un filtre centré sur l'axe des Wy et représenté par le cadre 21 sur la figure 10, ce filtre sélectionnant des valeurs de la transformée Fourier qui appartiennent uniquement à cet ordre premier 12, et
- déconvoluer les ordres premier isolés par l'ordre zéro isolé.

La reconstruction du front d'onde peut par exemple consister en une transformée de Fourier inverse du résultat d'une fonction appliquée sur lesdits ordres premier déconvolués. La fonction appliquée est une fonction utilisée classiquement utilisée pour extraire une information de phase à partir d'ordres premier. De telles fonctions sont décrites dans les références [1] à [4].

Il est possible d'adopter une autre approche pour supprimer l'influence des variations locales d'intensité d'un front d'onde à analyser sur le calcul des gradients locaux de phase du front d'onde à analyser. En effet, pour le cas de la technologie Hartmann en particulier une approche locale et géométrique peut être utilisée. En effet, en première approximation, la tache formée sur le détecteur DM par le passage de la partie du front d'onde FO interceptée par un trou T subit un déplacement parasite lié à la variation de l'intensité devant ledit trou égal au déplacement du barycentre énergétique calculé dans le plan du trou. Par conséquent, la connaissance de la variation d'intensité dans le plan du trou permet le calcul du déplacement du barycentre énergétique du front d'onde intercepté par le trou par rapport au centre du trou. Cette valeur de déplacement est la valeur qu'il faut soustraire à la position du barycentre de la tache formée sur le détecteur matriciel (par exemple CMOS « Complementary metal-oxide-semiconductor » ou CCD « Charge Coupled Device ») par ce dit trou pour supprimer l'erreur engendrée par la variation d'intensité. Pour déterminer la variation locale de l'intensité du front d'onde, on utilise l'intensité mesurée dans les taches issues des micro-trous. En effet, si le front d'onde présente localement une intensité plus forte les taches formées sur le détecteur matriciel par les trous interceptant cette zone du front d'onde seront eux même plus intenses et la relation reliant l'intensité de ces taches à l'intensité locale du front d'onde est parfaitement linéairement proportionnelle. Ainsi la mesure de l'intensité de chaque tache issue des micro-trous permet de réaliser une cartographie complète de la répartition d'intensité du front d'onde mesuré avec une résolution spatiale égale à l'échantillonnage défini par la matrice de micro-trous. Cette cartographie peut alors être utilisée pour déterminer la variation locale de l'intensité devant chaque micro-trou. Les gradients d'intensité sont donnés par la dérivée de la carte d'intensité du front d'onde mesuré. Ces gradients d'intensité sont alors utilisés pour déterminer la variation de position du barycentre énergétique des taches engendrée par la variation locale d'intensité du front d'onde mesuré.

On peut par exemple utiliser les formules:

$$b_{\text{int } ensité}^{X}(i,j) = K * \frac{\Delta I^{X}(i,j)}{I(i,j)}$$

$$b_{\text{int } ensité}^{Y}(i,j) = K * \frac{\Delta I^{Y}(i,j)}{I(i,j)}$$

$b_{\text{int } ensité}^{X}(i,j)$ et $b_{\text{int } ensité}^{Y}(i,j)$ étant la variation, engendrée par la variation locale d'intensité du front d'onde mesuré, et respectivement dans la direction X ou Y, de la position du barycentre énergétique de la tache associée au micro trou situé à la ligne i et à la colonne j de la matrice de micro-trous ;

$I(i,j)$ étant l'intensité de la tache issue du micro trou situé à la ligne i et à la colonne j de la matrice de micro-trous ;

$\Delta I^{X}(i,j)$ et $\Delta I^{Y}(i,j)$ étant la variation locale d'intensité du front d'onde , respectivement dans la direction X ou Y, et devant le micro trou situé à la ligne i et à la colonne j de la matrice de micro-trous;

$\frac{\Delta I^{X}(i,j)}{I(i,j)}$ (par exemple égal à $\frac{I(i+1,j) - I(i-1,j)}{2I(i,j)}$) et $\frac{\Delta I^{Y}(i,j)}{I(i,j)}$ (par exemple égal à

$\frac{I(i,j+1) - I(i,j-1)}{2I(i,j)}$) étant le contraste d'intensité, respectivement dans la direction X ou Y, et vu par le micro trou situé à la ligne i et à la colonne j de la matrice de micro-trous ;

K étant un coefficient déterminé théoriquement ou expérimentalement.

On peut ainsi déterminer $b_{phase}^{X}(i,j)$ et $b_{phase}^{Y}(i,j)$ la variation, engendrée par la variation locale de phase du front d'onde mesuré, et respectivement dans la direction X ou Y, de la position du barycentre énergétique de la tache associée au micro trou situé à la ligne i et à la colonne j de la matrice de micro-trous. On peut par exemple utiliser les formules:

$$b_{phase}^{X}(i,j) = b_{mesurée}^{X}(i,j) - b_{\text{int } ensité}^{X}(i,j)$$

$$b_{phase}^{Y}(i,j) = b_{mesurée}^{Y}(i,j) - b_{\text{int } ensité}^{Y}(i,j)$$

$b_{imesurée}^{X}(i,j)$ et $b_{mesurée}^{Y}(i,j)$ étant la variation, respectivement dans la direction X ou Y, de la position du barycentre énergétique de la tache associée au micro trou situé à la ligne i et à la colonne j de la matrice de micro-trous et mesurée par le détecteur.

De même, on peut déterminer $E^X$ (i,j) et $E^Y$ (i,j) l'erreur de calcul, exécuté par le logiciel dédié d'analyse, de la dérivée de la phase respectivement dans la direction X ou Y et devant le micro trou situé à la ligne i et à la colonne j de la matrice de micro-trous. Cette détermination peut par exemple être effectuée au moyen d'une formule qui dépend du contraste respectivement $\dfrac{\Delta I^X(i,j)}{I(i,j)}$ ou $\dfrac{\Delta I^Y(i,j)}{I(i,j)}$ et d'un coefficient $C_{c\text{-}p}$ déterminé théoriquement ou expérimentalement :

$$E^X(i,j) = C_{c\text{-}p} * \frac{\Delta I^X(i,j)}{I(i,j)}$$

$$E^Y(i,j) = C_{c\text{-}p} * \frac{\Delta I^Y(i,j)}{I(i,j)}$$

On peut alors déterminer une valeur corrigée $P^X_{r\acute{e}elle}(i,j)$ et $P^Y_{r\acute{e}elle}(i,j)$ de la dérivée de la phase respectivement dans la direction X ou Y et devant le micro trou situé à la ligne i et à la colonne j de la matrice de micro-trous. On peut par exemple utiliser les formules :

$$P^X_{r\acute{e}elle}(i,j) = P^X_{mesur\acute{e}e}(i,j) - E^X(i,j)$$

$$P^Y_{r\acute{e}elle}(i,j) = P^Y_{mesur\acute{e}e}(i,j) - E^Y(i,j)$$

$P^X_{mesur\acute{e}e}(i,j)$ et $P^X_{mesur\acute{e}e}(i,j)$ étant la dérivée de la phase, respectivement dans la direction X ou Y, et devant le micro trou situé à la ligne i et à la colonne j de la matrice de micro-trous, calculée par le logiciel dédié d'analyse.

Ainsi, en pratique, le module logiciel de correction est agencé pour coopérer avec le logiciel d'analyse et de reconstruction de front d'onde.

Pour déterminer expérimentalement un coefficient de correction tel que $K$ ou $C_{c\text{-}p}$, on peut procéder comme illustré sur la figure 6 : on injecte en entrée de l'analyseur un front d'onde FOH sensiblement homogène en intensité et dont la phase est connue (théoriquement ou expérimentalement), et on insère devant l'entrée de l'analyseur un masque MA dont la transmission n'est pas homogène spatialement.

On va décrire le masque utilisé en référence aux figures 7 et 8. Le long d'un axe principal Y, le masque possède un profil de transmission optique en forme de toit, la transmission optique du masque croissant sensiblement linéairement des bords du masque jusqu'au centre du masque de 0 à 1. Le long d'un axe X perpendiculaire à l'axe Y, le masque possède une transmission optique constante. Dans un mode de réalisation non limitatif, le masque est par exemple rectangulaire, de longueur 7 mm le long de l'axe X et de longueur 3.6 mm le long de l'axe Y, et est inséré dans une plaque en verre de type BK7 avec une traitement anti-reflet et de 15 mm de côté.

Le masque est centré sur la matrice de trou. Par commodité, l'axe X du masque est parallèle à la direction X telle que définie dans les équations ci-dessus, et donc avec l'alignement des lignes de micro-trous, et l'axe Y du masque est parallèle à la direction Y telle que définie dans les équations ci-dessus, et donc avec l'alignement des colonnes de micro-trous. Le front d'onde homogène FOH traverse le masque et, le long de l'axe Y, le contraste $\dfrac{\Delta I^Y(i,j)}{I(i,j)}$ est plus important aux bords de la matrice de micro-trous et nul au centre, et de signe opposée des deux côtés du centre de la matrice (correspondant à une transmission du masque maximale). Tel qu'illustré sur la figure 6, le déplacement de la position BA du barycentre énergétique de chacune des taches obtenues sur le détecteur DM en présence du masque s'effectue parallèlement à l'axe Y et vers le centre du détecteur, et est plus important aux bords du détecteur qu'au centre du détecteur.

Le choix d'une transmission en toit plutôt que d'une transmission linéaire de 1 à 0 sur l'ensemble de la matrice de microlentilles, permet de s'affranchir de l'éventuel tilt introduit par le masque de transmission lui-même, dans le cas où ses deux faces ne seraient pas parfaitement parallèles.

Le détecteur permet de faire une cartographie de l'intensité et donc des gradients d'intensité du front d'onde ayant traversé le masque, et permet donc de déterminer le contraste de l'intensité devant chacun des trous.

Une observation du déplacement de la position du barycentre énergétique de chacune des taches obtenues sur le détecteur en présence du masque permet donc de déterminer le coefficient $K$ (reliant le contraste devant un trou à la variation, engendrée par ce contraste, de la position du barycentre énergétique d'une tache issue de ce micro-trou) ou $C_{c\text{-}p}$ (reliant le contraste devant un trou à l'erreur de calcul de la dérivée de la phase devant le micro-trou). Cette observation permet donc de déterminer, pour un front d'onde quelconque à analyser, la correction à apporter à chaque tache pour le calcul des gradients locaux de phase en fonction des gradients locaux d'intensité.

Pour un analyseur pour lequel on ne connaît pas la position du barycentre énergétique de chacune des taches obtenues sur le détecteur sans le masque et à partir d'un front d'onde homogène en intensité et de phase quelconque, on peut réaliser en outre comme référence une observation de la position de chacune des taches ou franges obtenues sur le détecteur sans le masque. Ceci peut être le cas si l'analyseur n'est pas calibré ou si le front d'onde à analyser à une répartition de phase inconnue.

On peut aussi déterminer théoriquement un coefficient de correction tel que $K$ ou $C_{c\text{-}p}$.

L'expression du déplacement de là tache sur le capteur matriciel est :

$$b^{X}_{\text{int ensité}}(i,j) = p^{X}_{i,j}(0)$$

$$b^{Y}_{\text{int ensité}}(i,j) = p^{Y}_{i,j}(0)$$

$p^{X}_{i,j}(0)$ ou $p^{Y}_{i,j}(0)$ représente la variation de la position du barycentre énergétique dans le plan de la matrice de micro trous au niveau du micro trou $(i,j)$ respectivement sur l'axe X et sur l'axe Y.

Pour le calcul de $p^{X}_{i,j}(0)$ ou $p^{Y}_{i,j}(0)$, on considère que la microlentille i,j voit un contraste d'intensité dI/I (respectivement $dI^{X}/I$ sur l'axe X et $dI^{Y}/I$ sur l'axe Y):

$$\frac{dI}{I} = \frac{I_{i+1,j} - I_{i-1,j}}{2I} = \frac{I_{i+1,j} - I_{i-1,j}}{I_{i+1,j} + I_{I-1,j}} \qquad (3)$$

Le barycentre est donné par :

$$p_{i,j} = \frac{\sum_{j}\sum_{i} iPix(i,j)}{\sum_{j}\sum_{i} Pix(i,j)}$$

Ce qui conduit à :

$$\boxed{p_{i,j}(0) = D_{\mu l}\frac{1}{12}\frac{dI}{I}} \qquad (6)$$

D'où:

$$K = D_{\mu l}\frac{1}{12}$$

L'erreur sur le calcul de la pente locale est obtenue en divisant l'erreur lié au déplacement de la tache sur le capteur par la distance $Z_{\text{capteur}}$ séparant ce dernier du plan des trous de la matrice de microtrous.

Donc l'erreur en pente est :

$$E^X(i,j) = \frac{p_{i,j}^X(0)}{Z_{capteur}} = \frac{1}{Z_{capteur}} D_{\mu l} \frac{1}{12} \frac{dI^X(i,j)}{I}$$

$$E^Y(i,j) = \frac{p_{i,j}^Y(0)}{Z_{capteur}} = \frac{1}{Z_{capteur}} D_{\mu l} \frac{1}{12} \frac{dI^Y(i,j)}{I}$$

Ainsi le paramètre $C_{c\text{-}p}$ est :

$$C_{c-p} = \frac{1}{Z_{capteur}} D_{\mu l} \frac{1}{12}$$

Dans le cas d'un analyseur de type Shack-Hartmann, en référence aux figures 2, 3 et 5, il est possible d'optimiser l'analyseur de front d'onde. On peut pour cela chercher à positionner le détecteur dans le plan de focalisation de la matrice de micro lentille. On peut réaliser pour cela les étapes suivantes avant l'analyse d'un front d'onde FO à analyser:

- une injection, en entrée de l'analyseur, d'un front d'onde FOH sensiblement homogène en intensité et dont la phase est connue,
- une insertion devant l'entrée de l'analyseur d'un masque MA dont la transmission n'est pas homogène spatialement, de sorte que le front d'onde homogène traverse le masque avant d'être décomposé par l'analyseur en une pluralité de taches sur le détecteur,
- une observation de la position de chacune des taches obtenues sur le détecteur en présence du masque,
- un retrait du masque de devant l'entrée de l'analyseur,
- une observation sans masque de la position de chacune des taches obtenues sur le détecteur,
- un déplacement du détecteur relativement à la matrice de micro-lentilles, et
- une réitération des étapes précédentes en minimisant la différence de position des taches entre l'observation sans masque et l'observation en présence du masque.

Le masque permet de visualiser l'effet de gradients locaux d'intensité d'un front d'onde sur le calcul des gradients locaux de phase de ce front d'onde. En déplaçant le détecteur, on minimise cet effet en cherchant à placer le détecteur dans le plan focal de la matrice de micro-lentille. On corrige ainsi le calcul des gradients locaux de phase effectué par l'analyseur. Cependant, cette correction n'est valable que pour un front d'onde à analyser proche (en longueur d'onde, en phase,...) du front d'onde homogène FOH utilisé pour régler la position du détecteur dans le plan focal PF. On utilisera de préférence un masque tel qu'illustré sur les figures 7 et 8 et déjà décrit précédemment.

Dans le cas du Shack Hartmann, il est aussi possible d'adopter une approche de correction pour supprimer l'influence des gradients locaux d'intensité d'un front d'onde à analyser sur le calcul des gradients locaux de phase du front d'onde à analyser. Ce procédé de correction contribue à générer des données de correction dépendant de la distance $\varepsilon$ entre le plan de focalisation PF et le détecteur matriciel. La correction de l'influence de la répartition d'intensité du front d'onde mesuré dans le cadre de la technologie Shack Hartmann est un peu plus complexe à analyser que dans le cas Hartmann car elle fait intervenir le calcul des courbures locales. Le processus de correction devient donc itératif.

1. Une cartographie des gradients locaux de phase d'un front d'onde à analyser FO est réalisée, ainsi qu'une cartographie de la répartition de l'intensité (par exemple comme décrit pour le cas Hartmann).

2. Une dérivation des gradients locaux de phase permet de déterminer une cartographie des courbures locales du front d'onde à analyser. De la cartographie des courbures locales, on détermine aisément la position longitudinale du plan de focalisation de chacune des taches.

3. La connaissance simultanée de la position du plan de focalisation de chaque tache ainsi que la cartographie des gradients d'intensité devant chaque microlentille (pouvant être déterminée de la même façon que pour le cas Hartmann) permet de déterminer la correction à apporter à la position de chaque taches.

4. les gradients locaux de phase ayant évolué grâce à la correction réalisée au point 3, la cartographie des courbures locales est elle-même modifiée, entraînant une évolution de la position longitudinale calculée du plan de focalisation de chacune des taches. Le calcul doit donc être itératif sur les étapes 1,2 et 3.

Concernant l'étape 3, il existe en fait plusieurs façons de déterminer la correction à apporter à la position de chaque taches ou au calcul des gradients locaux de phase. On peut par exemple utiliser des formules comparables aux formules données précédemment pour un analyseur du type Hartman, chaque micro trou étant remplacé par une micro lentille, et les coefficients $K$ et $C_{c\text{-}p}$ étant remplacés respectivement par des coefficients $K'(i,j)$ et $C'_{c\text{-}p}(i,j)$ qui dépendent non seulement de la longueur d'onde du front d'onde analyser mais aussi de la distance entre d'une part le plan de focalisation de la micro lentille située à la ligne i et à la colonne j et d'autre part le détecteur.

Une façon dite théorique consiste à déterminer les formules utilisées ou les coefficients $K'(i,j)$ et $C'_{c\text{-}p}(i,j)$ à partir d'une modélisation et d'une mise en équation des phénomènes physiques. L'expression du déplacement de la tache sur le capteur matriciel est :

$$b^{X}_{\text{int}\,ensité}(i,j) = \frac{p^{X}_{i,j}(0)}{foc} * (foc - Z_{capteur})$$

$$b^{Y}_{\text{int}\,ensité}(i,j) = \frac{p^{Y}_{i,j}(0)}{foc} * (foc - Z_{capteur})$$

- $Z_{capteur}$ est la distance séparant le capteur du plan principal image la matrice de microlentilles.
- $p^{X}_{i,j}(0)$ ou $p^{Y}_{i,j}(0)$ représente la variation du barycentre énergétique dans le plan de la matrice de microlentille au niveau de la microlentille (i,j) respectivement sur l'axe X et sur l'axe Y.
- foc est la distance séparant le plan principal image de la matrice de microlentilles du plan de focalisation de la microlentille (i,j) considérée.

Pour le calcul de $p^{X}_{i,j}(0)$ ou $p^{Y}_{i,j}(0)$, on considère que la microlentille i,j voit un contraste d'intensité dI/I (respectivement $dI^{X}/I$ sur l'axe X et $dI^{Y}/I$ sur l'axe Y):

$$\frac{dI}{I} = \frac{I_{i+1,j} - I_{i-1,j}}{2I} = \frac{I_{i+1,j} - I_{i-1,j}}{I_{i+1,j} + I_{i-1,j}} \qquad (3)$$

Le barycentre est donné par :

$$p_{i,j} = \frac{\sum_{j}\sum_{i} iPix(i,j)}{\sum_{j}\sum_{i} Pix(i,j)}$$

Ce qui conduit à :

$$\boxed{p_{i,j}(0) = D_{\mu l}\frac{1}{12}\frac{dI}{I}} \qquad (6)$$

Où $D_{\mu l}$ est le diamètre (ou coté) d'une microlentille.
On a donc :

$$b^{X}_{\text{int}\,ensité}(i,j) = \frac{p^{X}_{i,j}(0)}{foc} * (foc - Z_{capteur}) = \frac{(foc - Z_{capteur})}{foc} D_{\mu l}\frac{1}{12}\frac{dI^{X}(i,j)}{I}$$

$$b^{Y}_{\text{int ensité}}(i,j) = \frac{p^{Y}_{i,j}(0)}{foc} * (foc - Z_{capteur}) = \frac{(foc - Z_{capteur})}{foc} D_{\mu l} \frac{1}{12} \frac{dI^{Y}(i,j)}{I}$$

Ainsi le paramètre K' vaut :

$$K' = \frac{(foc - Z_{capteur})}{foc} D_{\mu l} \frac{1}{12}$$

L'erreur sur le calcul de la pente locale est obtenue en divisant l'erreur lié au déplacement de la tache sur le capteur par la distance $Z_{capteur}$ séparant ce dernier du plan principal image de la matrice de microlentilles. On a donc pour l'expression de E(i,j) pour les axes X et Y :

$$E^{X}(i,j) = \frac{p^{X}_{i,j}(0)}{foc * Z_{capteur}} * (foc - Z_{capteur}) = \frac{(foc - Z_{capteur})}{foc * Z_{capteur}} D_{\mu l} \frac{1}{12} \frac{dI^{X}(i,j)}{I}$$

$$E^{Y}(i,j) = \frac{p^{Y}_{i,j}(0)}{foc * Z_{capteur}} * (foc - Z_{capteur}) = \frac{(foc - Z_{capteur})}{foc * Z_{capteur}} D_{\mu l} \frac{1}{12} \frac{dI^{Y}(i,j)}{I}$$

Ainsi le paramètre $C'_{c-p}$ devient :

$$C'_{c-p} = \frac{(foc - Z_{capteur})}{foc * Z_{capteur}} D_{\mu l} \frac{1}{12}$$

Toute les distances sont comptées positives dans le sens de propagation de la lumière, c'est-à-dire de la matrice de microlentilles vers le capteur matriciel. La correction est évidemment l'opposée de l'erreur.

Une façon dite pratique consiste à déterminer les formules utilisées ou les coefficients $K'(i,j)$ et $C'_{c-p}(i,j)$ expérimentalement. Expérimentalement on trouve plutôt $\boxed{p_{i,j}(0) = D_{\mu l} \frac{1}{16} \frac{dI}{I}}$ ce qui n'est tout à fait égal au résultat de la détermination théorique. Cependant l'expression calculée théoriquement apporte déjà une bonne correction. Les coefficients $K'(i,j)$ et $C'_{c-p}(i,j)$ peuvent par exemple être déterminés de la même manière que pour un analyseur Hartman à l'aide d'un masque dont la transmission n'est pas homogène spatialement : on utilise un faisceau collimaté (font d'onde homogène en intensité et plan), on répète l'opération de mesure successivement sans masque et avec masque, on détermine pour chaque tache et donc chaque mico-lentille les gradients d'intensité du front d'onde en entrée de l'analyseur lorsqu'il a traversé le masque, on mesure les déplacement des barycentres énergétiques de chaque tache dus aux gradients locaux d'intensité entre la mesure sans masque et la mesure avec masque, et on détermine les coefficients de correction $K'(i,j)$ et $C'_{c-p}(i,j)$ de façon expérimentale. On répète ces mesures pour différentes positions longitudinales, par rapport au détecteur, du plan de focalisation de chaque tache (par exemple en faisant varier la distance entre le détecteur et la matrice de micro-lentilles). On détermine ainsi, pour un front d'onde à analyser, la correction à apporter à chaque tache pour le calcul des gradients locaux de phase en fonction des gradients locaux d'intensité, et en fonction de la position du point de focalisation de la matrice de micro-lentilles par rapport au capteur matriciel. Ainsi, pour le cas Shack-Hartmann, la loi de correction est une fonction à deux variables, contrairement au cas Hartmann pour lequel la loi de correction est une fonction à une variable.

Bien sûr, l'invention n'est pas limitée aux exemples qui viennent d'être décrits et de nombreux aménagements peuvent être apportés à ces exemples sans sortir du cadre de l'invention.

Le procédé de correction selon l'invention peut notamment être implémenté dans des mesures de front d'onde sur des systèmes optiques intégrant des lasers, et pour la caractérisation de systèmes optiques à variation de transmission et de sources optiques non homogènes.

Il peut ainsi être mise en œuvre en métrologie optique et laser, en ophtalmologie, en optique adaptative et en astronomie.

**Références :**

[1] article « Direct demodulation of Hartmann-Shack patterns » de Amos Talmi et al., paru dans J. Opt. Soc. Am. A, Vol.21, No. 4, Avril 2002.

[2] article « Wave-front reconstruction from multidirectional phase derivatives generated by multilateral shearing interferometers », de Sabrina Velghe et al., paru dans Optics Letters Vol.30, No.3, 1er février 2005.

[3] article « Achromatic three-wave (or more) lateral shearing interferometer », de J. Primot et al., paru dans J. Opt. Soc. Am. A, Vol.12, No.12, Décembre 1995.

[4] article « Phase Retrieval by demodulation of a Hartmann-Shack sensor», de Y. Carmon et al., paru dans Optics Communications, Vol.215, pages 285-288, janvier 2003.

**Revendications**

1. Procédé pour corriger un analyseur de front d'onde, cet analyseur mettant en œuvre une détection d'un signal à partir d'un front d'onde incident à analyser (FO), ledit signal ainsi détecté procurant des informations locales de phase et d'intensité du front d'onde à analyser, **caractérisé en ce qu'**il comprend une correction d'un calcul de phase du front d'onde à analyser (FO) en fonction d'une variation spatiale d'intensité du front d'onde à analyser (FO).

2. Procédé selon la revendication 1, **caractérisé en ce que** l'analyseur met en œuvre une étape de décomposition du front d'onde à analyser (FO) en une pluralité de taches (TA) ou de franges sur un détecteur (DM).

3. Procédé selon la revendication 2, **caractérisé en ce que** la correction consiste en une correction d'un calcul de gradients locaux de phase du front d'onde à analyser (FO) en fonction de gradients locaux d'intensité du front d'onde à analyser (FO).

4. Procédé selon la revendication 3, **caractérisé en ce qu'**il comprend en outre les étapes suivantes :

   - une mesure de l'intensité de chaque tache (TA) ou frange,
   - une détermination des gradients locaux d'intensité du front d'onde à analyser (FO).

5. Procédé selon la revendication 3 ou 4, **caractérisé en ce que** la correction est réalisée selon une loi de correction.

6. Procédé selon la revendication 5, **caractérisé en ce qu'**il comprend en outre, avant la détection du signal à partir du front d'onde à analyser (FO), une détermination de la loi de correction comprenant les étapes suivantes :

   - une injection, en entrée de l'analyseur, d'un front d'onde sensiblement homogène en intensité et dont la phase est connue (FOH),
   - une insertion, devant l'entrée de l'analyseur, d'un masque (MA) dont la transmission n'est pas homogène spatialement, de sorte que le front d'onde homogène (FOH) traverse le masque (MA) avant d'être décomposé par l'analyseur en une pluralité de taches ou de franges sur le détecteur (DM),
   - une observation de la position de chacune des taches ou franges obtenues sur le détecteur en présence du masque, et
   - une détermination, à partir de ladite observation, de la loi de correction à apporter pour le calcul des gradients locaux de phase du front d'onde à analyser (FO) en fonction des gradients locaux d'intensité du front d'onde à analyser (FO).

7. Procédé selon la revendication 6, **caractérisé en ce qu'**il comprend en outre, pour la détermination de la loi de correction, une observation de la position de chacune des taches (TA) ou franges obtenues sur le détecteur (DM) sans le masque.

8. Procédé selon la revendication 6 ou 7, caractérisé en ce l'observation de la position d'une tache (TA) ou frange comprend une détermination de la position (BA) du barycentre énergétique de la tache ou frange sur le détecteur (DM).

9. Procédé selon l'une des revendications 6 à 8, mis en œuvre pour corriger un analyseur du type Shack-Hartmann ou Hartmann-Shack, à matrice (ML) de microlentilles (L), **caractérisé en ce que** les étapes de la détermination de la loi de correction sont réitérées pour plusieurs positions longitudinale, par rapport au détecteur, du plan de focalisation de chaque tache.

10. Procédé selon l'une des revendications 3 à 8, mis en œuvre pour corriger un analyseur du type Shack-Hartmann ou Hartmann-Shack, à matrice (ML) de microlentilles (L), **caractérisé en ce qu'**il comprend la séquence d'étapes suivante:

   - une cartographie des gradients locaux de phase du front d'onde à analyser (FO), de préférence devant chaque micro-lentille (L),
   - une cartographie des gradients locaux d'intensité du front d'onde à analyser, de préférence devant chaque micro-lentille (L),
   - une détermination à partir desdits gradients locaux de phase, d'une cartographie des courbures locales de phase du front d'onde à analyser,
   - une détermination d'une position longitudinale du plan de focalisation de chacune des taches (TA),
   - pour chaque tache, une correction pour le calcul des gradients locaux de phase, à partir de la position du plan de focalisation de la tache et de la cartographie des gradients d'intensité devant chaque microlentille.

11. Procédé selon l'une des revendications 1 à 3, **caractérisé en ce qu'**il comprend les étapes suivantes :

   - une réalisation d'une transformation de Fourier du signal détecté brut,
   - un isolement de l'ordre zéro de la Transformée de Fourier,
   - une réalisation d'une transformation de Fourier inverse dudit ordre zéro de façon à obtenir une forme de l'intensité du front d'onde à analyser (FO),
   - une division dudit signal détecté brut par ladite forme d'intensité.

12. Procédé selon l'une des revendications 1 à 3, **caractérisé en ce qu'**il comprend les étapes suivantes :

   - une réalisation d'une transformation de Fourier du signal détecté brut,
   - une étape de déconvolution des ordres premier de la transformée de Fourier du signal brut par l'ordre zéro de la transformée de Fourier du signal brut,
   - une reconstruction du front d'onde à analyser (FO) corrigé en phase, à partir desdits ordres premier déconvolués.

13. Procédé selon l'une des revendications 1 à 8, 11 et 12, mis en œuvre pour corriger un analyseur du type Hartmann, à matrice (MT) de micro-trous (T).

14. Procédé selon l'une des revendications 1 à 8, 11 et 12, mis en œuvre pour corriger un analyseur de phase du type interféromètre multi-ondes.

15. Procédé selon l'une des revendications 2 à 8, mis en œuvre pour corriger un analyseur du type Shack-Hartmann ou Hartmann-Shack, à matrice (ML) de microlentilles (L).

16. Procédé selon la revendication 15, **caractérisé en ce qu'**il comprend en outre, avant la détection du signal à partir du front d'onde à analyser (FO), une optimisation de l'analyseur comprenant les étapes suivantes :

   - une injection, en entrée de l'analyseur, d'un front d'onde sensiblement homogène en intensité et dont la phase est connue (FOH),
   - une insertion, devant l'entrée de l'analyseur, d'un masque (MA) dont la transmission n'est pas homogène spatialement, de sorte que le front d'onde homogène (FOH) traverse le masque avant d'être décomposé par l'analyseur en une pluralité de taches sur le détecteur (DM),

- une observation de la position de chacune des taches (TA) obtenues sur le détecteur en présence du masque,
- un retrait du masque (MA) de devant l'entrée de l'analyseur,
- une observation sans masque de la position de chacune des taches obtenues sur le détecteur (DM),
- un déplacement du détecteur relativement à la matrice de micro-lentilles, et
- une réitération des étapes précédentes pour minimiser la différence de position des taches entre l'observation sans masque et l'observation en présence du masque.

17. Analyseur de front d'onde comprenant :

- des moyens (DM) pour détecter un signal à partir d'un front d'onde incident à analyser (FO), ledit signal ainsi détecté procurant des informations locales de phase et d'intensité du front d'onde à analyser,
- des moyens agencés pour une correction d'un calcul de phase du front d'onde à analyser (FO) en fonction d'une variation spatiale d'intensité du front d'onde à analyser (FO).

**Patentansprüche**

1. Verfahren für das Korrigieren eines Wellenfrontenanalysators, wobei der Analysator eine Detektion eines Signals ausgehend von einer eintreffenden, zu analysierenden Wellenfront (FO) durchführt, wobei das so detektierte Signal lokale Informationen der Phase und Intensität der zu analysierenden Wellenfront vermittelt, **dadurch gekennzeichnet, dass** es eine Korrektur einer Berechnung der Phase der zu analysierenden Wellenfront (FO) in Funktion einer räumlichen Variation der Intensität der zu analysierenden Wellenfront (FO) aufweist.

2. Verfahren nach Anspruch 1, **dadurch gekennzeichnet, dass** der Analysator einen Schritt der Zerlegung der zu analysierenden Wellenfront (FO) in eine Vielzahl von Flecken (TA) oder Interferenzmustern auf einem Detektor (DM) durchführt.

3. Verfahren nach Anspruch 2, **dadurch gekennzeichnet, dass** die Korrektur aus einer Korrektur einer Berechnung lokaler Gradienten der Phase der zu analysierenden Wellenfront (FO) in Funktion der lokalen Gradienten der Intensität der zu analysierenden Wellenfront (FO) besteht.

4. Verfahren nach Anspruch 3, **dadurch gekennzeichnet, dass** es weiterhin die folgenden Schritte aufweist:

- eine Messung der Intensität jedes Flecks (TA) oder Franse,
- eine Bestimmung der lokalen Gradienten der Intensität der zu analysierenden Wellenfront (FO).

5. Verfahren nach Anspruch 3 oder 4, **dadurch gekennzeichnet, dass** die Korrektur gemäß einer Korrekturvorgabe durchführt wird.

6. Verfahren nach Anspruch 5, **dadurch gekennzeichnet, dass** es weiterhin, vor der Detektion des Signals ausgehend von der zu analysierenden Wellenfront (FO), eine Bestimmung der Korrekturvorgabe mit den folgenden Schritten aufweist:

- ein Einbringen einer in der Intensität im Wesentlichen homogenen Wellenfront mit bekannter Phase (FOH) in den Eingang des Analysators,
- ein Einführen einer Maske (MA), deren Transmission räumlich nicht homogen ist, vor den Eingang des Analysators, sodass die homogene Wellenfront (FOH) die Maske (MA) durchquert, bevor sie durch den Analysator in eine Vielzahl von Flecken oder Interferenzmustern auf dem Detektor (DM) zerlegt wird,
- eine Beobachtung der Position jedes oder jeder der auf dem Detektor in Anwesenheit der Maske erhaltenen Flecken oder Interferenzmustern, und
- eine Bestimmung, ausgehend von der Beobachtung, der Korrekturvorgabe zur Anwendung bei der Berechnung der lokalen Gradienten der Phase der zu analysierenden Wellenfront (FO) in Funktion der lokalen Gradienten der Intensität der zu analysierenden Wellenfront (FO).

7. Verfahren nach Anspruch 6, **dadurch gekennzeichnet, dass** es weiterhin für die Bestimmung der Korrekturvorgabe eine Beobachtung der Position jedes oder jeder der ohne die Maske auf dem Detektor (DM) erhaltenen Flecken (TA) oder Interferenzmuster aufweist.

8. Verfahren nach Anspruch 6 oder 7, **dadurch gekennzeichnet, dass** die Beobachtung der Position eines Flecks (TA) oder eines Interferenzmuster die Bestimmung der Position des Schwerpunkts der Energie des Flecks oder des Interferenzmusters auf dem Detektor (DM) aufweist.

9. Verfahren nach einem der Ansprüche 6 bis 8, das für das Korrigieren eines Analysators des Typs Shack-Hartmann oder Hartmann-Shack mit Mikrolinsen(L)-Matrix (ML) durchgeführt wird, **dadurch gekennzeichnet, dass** die Schritte der Bestimmung der Korrekturvorgabe für mehrere longitudinale Positionen der Fokusebene jeden Flecks bezüglich des Detektors wiederholt werden.

10. Verfahren nach einem der Ansprüche 3 bis 8, das für das Korrigieren eines Analysators des Typs Shack-Hartmann oder Hartmann-Shack mit Mikrolinsen(L)-Matrix (ML) durchgeführt wird, **dadurch gekennzeichnet, dass** es die folgende Schrittabfolge aufweist:

   - ein Kartografieren der lokalen Gradienten der Phase der zu analysierenden Wellenfront (FO), bevorzugt vor jeder Mikrolinse (L),
   - ein Kartografieren der lokalen Gradienten der Intensität der zu analysierenden Wellenfront, bevorzugt vor jeder Mikrolinse (L),
   - ein Bestimmen, ausgehend von den lokalen Gradienten der Phase, einer Kartografie der lokalen Krümmungen der Phase der zu analysierenden Wellenfront,
   - ein Bestimmen der longitudinalen Position der Fokusebene jedes der Flecken (TA),
   - für jeden Fleck ein Korrigieren der Berechnung der lokalen Gradienten der Phase, ausgehend von der Position der Fokusebene des Flecks und der Kartografie der Gradienten der Intensität vor jeder Mikrolinse.

11. Verfahren nach einem der Ansprüche 1 bis 3, **dadurch gekennzeichnet, dass** es die folgenden Schritte aufweist:

   - ein Durchführen einer Fourier-Transformation des detektierten Rohsignals,
   - ein Isolieren der nullten Ordnung der Fourier-Transformierten,
   - ein Durchführen einer inversen Fourier-Transformation der nullten Ordnung, sodass eine Form der Intensität der zu analysierenden Wellenfront (FO) erhalten wird,
   - ein Teilen des detektierten Rohsignals durch die Form der Intensität.

12. Verfahren nach einem der Ansprüche 1 bis 3, **dadurch gekennzeichnet, dass** es die folgenden Schritte aufweist:

   - ein Durchführen einer Fourier-Transformation des detektierten Rohsignals,
   - einen Schritt der Entfaltung der ersten Ordnungen der Fourier-Transformierten des Rohsignals durch die nullte Ordnung der Fourier-Transformierten des Rohsignals,
   - ein Rekonstruieren der in der Phase korrigierten, zu analysierenden Wellenfront (FO), ausgehend von den entfalteten ersten Ordnungen.

13. Verfahren nach einem der Ansprüche 1 bis 8, 11 und 12, das für das Korrigieren eines Analysators des Typs Hartmann mit Mikroloch(T)-Matrix (MT) durchgeführt wird.

14. Verfahren nach einem der Ansprüche 1 bis 8, 11 und 12, das für das Korrigieren eines Analysators des Typs Multiwellen-Interferometer durchgeführt wird.

15. Verfahren nach einem der Ansprüche 2 bis 8, das für das Korrigieren eines Analysators des Typs Shack-Hartmann oder Hartmann-Shack mit Mikrolinsen(L)-Matrix (ML) durchgeführt wird.

16. Verfahren nach Anspruch 15, **dadurch gekennzeichnet, dass** es weiterhin, vor der Detektion des Signals ausgehend von der zu analysierenden Wellenfront (FO), eine Optimierung des Analysators mit den folgenden Schritten aufweist:

   - ein Einbringen einer in der Intensität im Wesentlichen homogenen Wellenfront mit bekannter Phase (FOH) in den Eingang des Analysators,
   - ein Einführen einer Maske (MA), deren Transmission räumlich nicht homogen ist, vor den Eingang des Analysators, sodass die homogene Wellenfront (FOH) die Maske (MA) durchquert, bevor sie durch den Analysator in eine Vielzahl von Flecken oder Interferenzmustern auf dem Detektor (DM) zerlegt wird,
   - ein Beobachten der Position jedes oder jeder der auf dem Detektor in Anwesenheit der Maske erhaltenen Flecken (TA) oder Interferenzmustern,
- ein Zurückziehen der Maske (MA) von vor dem Eingang des Analysators,
- ein Beobachten der Position jedes der ohne Maske auf dem Detektor (DM) erhaltenen Flecken,
- ein Verlagern des Detektors relativ zu der Mikrolinsen-Matrix, und
- ein Wiederholen der vorherigen Schritte, um den Unterschied der Position der Flecken zwischen der Beobachtung ohne Maske und der Beobachtung in Anwesenheit der Maske zu minimieren.

17. Wellenfrontanalysator mit:

- Mitteln (DM) zur Detektion eines Signals, das von einer eintreffenden, zu analysierenden Wellenfront (FO) ausgehend, wobei das so detektierte Signal lokale Informationen der Phase und Intensität der zu analysierenden Wellenfront vermittelt,
- Mitteln, die für eine Korrektur der Berechnung einer Phase der zu analysierenden Wellenfront (FO) in Funktion einer räumlichen Variation der Intensität der zu analysierenden Wellenfront (FO) eingerichtet sind.

## Claims

1. Process for correcting a wavefront analyzer, this analyzer detecting a signal from an incident wavefront to be analyzed (FO), said signal thus detected providing local information of phase and intensity on the wavefront to be analyzed, **characterized in that** it comprises a correction of a calculation of the phase of the wavefront to be analyzed (FO) as a function of a spatial variation of the intensity of the wavefront to be analyzed (FO).

2. Process according to claim 1, **characterized in that** the analyzer uses a step of breaking down the wavefront to be analyzed (FO) into a plurality of spots (TA) or fringes on a detector (DM).

3. Process according to claim 2, **characterized in that** the correction consists of a correction of a calculation of the local gradients of the phase of the wavefront to be analyzed (FO) as a function of the local gradients of the intensity of the wavefront to be analyzed (FO).

4. Process according to claim 3, **characterized in that** it comprises moreover the following steps:

   - a measurement of the intensity of each spot (TA) or fringe,
   - a determination of the local gradients of the intensity of the wavefront to be analyzed (FO).

5. Process according to claim 3 or 4, **characterized in that** the correction is carried out according to a correction law.

6. Process according to claim 5, **characterized in that** it comprises moreover, before the detection of the signal from the wavefront to be analyzed (FO), a determination of the correction law comprising the following steps:

   - an injection, at the input of the analyzer, of a wavefront that is substantially homogeneous in intensity and the phase of which is known (FOH),
   - an insertion, in front of the input of the analyzer, of a mask (MA) the transmission of which is not spatially homogeneous, such that the homogeneous wavefront (FOH) passes through the mask (MA) before being broken down by the analyzer into a plurality of spots or fringes on the detector (DM),
   - an observation of the position of each one of the spots or fringes obtained on the detector in the presence of the mask, and
   - a determination, from said observation, of the correction law to apply for the calculation of the local gradients of the phase of the wavefront to be analyzed (FO) as a function of the local gradients of the intensity of the wavefront to be analyzed (FO).

7. Process according to claim 6, **characterized in that** it comprises moreover, for the determination of the correction law, an observation of the position of each one of the spots (TA) or fringes obtained on the detector (DM) without the mask.

8. Process according to claim 6 or 7, **characterized in that** the observation of the position of a spot (TA) or fringe comprises a determination of the position of the energy barycentre (BA) of the spot or fringe on the detector (DM).

9. Process according to one of claims 6 to 8, implemented for correcting an analyzer of the Shack-Hartmann or Hartmann-Shack type, having an array (ML) of microlenses (L), **characterized in that** the steps of the determination of the correction law are reiterated for several longitudinal positions, with respect to the detector, of the focusing plane of each spot.

10. Process according to one of claims 3 to 8, implemented for correcting an analyzer of the Shack-Hartmann or Hartmann-Shack type, having an array (ML) of microlenses (L), **characterized in that** is comprises the following sequence of steps:

- a mapping of local gradients of phase of the wavefront to be analyzed (FO), preferably in front of each microlens (L),
- a mapping of the local gradients of intensity of the wavefront to be analyzed, preferably in front of each microlens (L),
- a determination, from said local gradients of phase, of a mapping of the local curvatures of phase of the wavefront to be analyzed,
- a determination of a longitudinal position of the focusing plane of each one of the spots (TA),
- for each spot, a correction for the calculation of the local gradients of phase, from the position of the focusing plane of the spot and from the mapping of the intensity gradients in front of each microlens.

11. Process according to one of claims 1 to 3, **characterized in that** it comprises the following steps:

- producing a Fourier transform of the unprocessed detected signal,
- an isolation of the zero order of the Fourier transform,
- producing an inverse Fourier transform of said zero order in such a way as to obtain an intensity shape of the wavefront to be analyzed (FO),
- a division of said unprocessed detected signal by said intensity shape.

12. Process according to one of claims 1 to 3, **characterized in that** it comprises the following steps:

- producing a Fourier transform of the unprocessed detected signal,
- a step of deconvolution of first orders of the Fourier transform of the unprocessed signal by the zero order of the Fourier transform of the unprocessed signal,
- a reconstruction of the wavefront to be analyzed (FO), corrected in terms of phase, from said deconvoluted first orders.

13. Process according to one of claims 1 to 8, 11 and 12, implemented for correcting an analyzer of the Hartmann type, having an array (MT) of micro-holes (T).

14. Process according to one of claims 1 to 8, 11 and 12, implemented for correcting a phase analyzer of the multiple-wave interferometer type.

15. Process according to one of claims 2 to 8, implemented for correcting an analyzer of the Shack-Hartmann or Hartmann-Shack type, having an array (ML) of microlenses (L).

16. Process according to claim 15, **characterized in that** it comprises moreover, before the detection of the signal from the wavefront to be analyzed (FO), an optimisation of the analyzer comprising the following steps:

- an injection, at the input of the analyzer, of a wavefront that is substantially homogeneous in intensity and phase of which is known (FOH),
- an insertion, in front of the input of the analyzer, of a mask (MA) the transmission of which is not spatially homogeneous, such that the homogeneous wavefront (FOH) passes through the mask before being broken down by the analyzer into a plurality of spots on the detector (DM),
- an observation of the position of each one of the spots (TA) obtained on the detector in the presence of the mask,
- a withdrawal of the mask (MA) from the front of the input of the analyzer,
- an observation, without the mask, of the position of each one of the spots obtained on the detector (DM),
- a displacement of the detector with respect to the array of microlenses, and
- a reiteration of the preceding steps in order to minimize the difference in position of the spots between the observation without the mask and the observation in the presence of the mask.

**17.** Wavefront analyzer comprising:

- means (DM) for detecting a signal from an incident wavefront to be analyzed (FO), said signal thus detected providing local information of phase and intensity on the wavefront to be analyzed,
- means arranged for correcting of a calculation of the phase of the wavefront to be analyzed (FO) as a function of a spatial variation of the intensity of the wavefront to be analyzed (FO).

Intensité

×

Profil d'intensité du
Front d'Onde incident
**FO** sur le micro-trou

Micro-trou **T**

Déplacement du
barycentre vers
les fortes
intensités

détecteur
**DM**

## FIG.1

Intensité

×

Profil d'intensité du
Front d'Onde incident
**FO** sur la microlentille

Micro-lentille **L**

détecteur
**DM**

Déplacement du
barycentre vers
les fortes
intensités.

Tache de diffraction
échantillonnée sur le
détecteur

## FIG.2

Position du barycentre
de la tache au niveau
de la microlentille

plan de focalisation de la
micro-lentille

Intensité

X

Z

Position du barycentre de la tache en
fonction de la position du détecteur

Profil d'intensité du Front
d'Onde incident **FO** sur la
microlentille

**L**

## FIG.3

Y

15mm

15mm

1.8mm
1.8mm

7mm

X

## FIG.7

Y

1.8m

0

Transmission

1

− 1.8mm

## FIG.8

FIG.4

FIG.5

FIG.6

FIG.9

FIG.10

## RÉFÉRENCES CITÉES DANS LA DESCRIPTION

**Documents brevets cités dans la description**

- US 2005045801 A1

- US 2005151960 A1

**Littérature non-brevet citée dans la description**

- **AMOS TALMI et al.** Direct demodulation of Hartmann-Shack patterns. *J. Opt. Soc. Am. A,* 04 Avril 2002, vol. 21
- **SABRINA VELGHE et al.** Wave-front reconstruction from multidirectional phase derivatives generated by multilateral shearing interferometers. *Optics Letters,* 01 Février 2005, vol. 30

- **J. PRIMOT et al.** Achromatic three-wave (or more) lateral shearing interferometer. *J. Opt. Soc. Am. A,* 12 Décembre 1995, vol. 12
- **Y. CARMON et al.** Phase Retrieval by demodulation of a Hartmann-Shack sensor. *Optics Communications,* Janvier 2003, vol. 215, 285-288